# EUROPEAN PATENT APPLICATION

(11) **EP 1 860 133 A1**
(43) Date of publication of application: **28.11.2007**
(21) Application number: 06729075.9
(22) Date of filing: 14.03.2006
(51) Int. Cl.: C08G 59/08, C08J 5/24, C08G 61/02

(54) **EPOXY RESIN, EPOXY RESIN COMPOSITION, AND UTILIZING THE SAME, PREPREG AND LAMINATED PLATE**

(30) Priority: 15.03.2005 JP 2005073070
(71) Applicant: NIPPON KAYAKU KABUSHIKI KAISHA, Tokyo 102-8172 (JP)
(72) Inventor: OSHIMI, Katsuhiko, NIPPON KAYAKU KK Function. Chem, Tokyo 1158588 (JP); AKATSUKA, Yasumasa, c/o NIPPON KAYAKU K.K., Sanyoonoda-shi Yamaguchi, 7578686 (JP); NAKANISHI, Masataka, 3-31-12 Shimo, Kita-ku, Tokyo1158588 (JP); SUNAGA, Takao, NIPPON KAYAKU KK Functional Chemic., Tokyo 1158588 (JP)
(74) Representative: Behnisch, Werner
(86) International application number: PCT/JP2006/305041
(87) International publication number: WO 2006/098329

(57) **Abstract**

An object of the present invention is to provide an epoxy resin exhibiting superior heat resistance, dielectric properties, water resistance, and workability, a resin composition containing the epoxy resin, and a prepreg and a laminated plate. The epoxy resin of the invention is expressed by the following formula. (In the formula, R represents a hydrocarbon group having a carbon number of 1 to 4. m Represents an integer of 1 to 4 and when m is 2 to 4, R's may be the same or different. n Represents a positive number of 1 to 6 on average.) The epoxy resin composition of the invention contains the epoxy resin of the invention and a curing agent.

## Description

### Technical Field

The present invention relates to an epoxy resin superior in storage stability, and an epoxy resin composition, prepreg and laminated plate containing the epoxy resin.

### Background Art

The demand for downsizing printed circuit boards on which electronic components, such as LSI, are mounted is increasingly rising. Accordingly, it is required that the wire width be reduced, that the diameters of through holes be reduced, or that the plating thickness be reduced. However, the reduction of plating thickness can cause the plating to crack when a heat shock is applied to the plating. Thus, circuit boards are required to be highly heat-resistant. In addition, high-speed information processing equipment is desired, and the clock frequency of CPUs tends to increase. Accordingly, a high signal transmission speed is desired, and the circuit board desirably has a low dielectric constant and a low dielectric loss tangent so as to be advantageous in increasing the processing speed. For preparing such a circuit board, in general, a base is impregnated with a varnish prepared by dissolving a thermosetting resin, such as epoxy resin, in a solvent, followed by hot pressing. In this instance, since the varnish is often stored for a long time, it is required that the varnish do not precipitate or phase-separate. Patent Document 1 has disclosed a composition containing an epoxy resin having a specific structure and a cyanate resin as a heat-resistant resin composition having superior dielectric properties. However, the structure of the epoxy resin disclosed in Patent Document 1 has high crystallinity, and consequently it is undesirably precipitated from a varnish of the resin composition during storage for a certain period.
Patent Document 1: Japanese Unexamined Patent Application Publication No. 2002-309085
Patent Document 2: Japanese Unexamined Patent Application Publication No. 5-117350
Patent Document 3: Japanese Unexamined Patent Application Publication No. 6-100667
Patent Document 4: Japanese Unexamined Patent Application Publication No. 8-143648

### Disclosure of Invention

### Problems to be Solved by the Invention

The present invention resulted from research to solve the above-described problems, and provides a resin composition, prepreg and laminated plate having superior heat resistance, dielectric properties, water resistance, and workability by use of an epoxy resin having a specific structure.

### Means for Solving the Problems

Specifically, the present invention relates to: an epoxy resin expressed by the following formula (1): 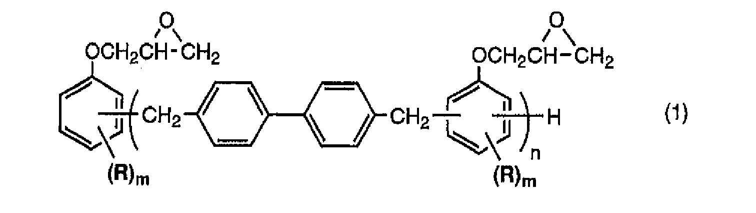 (In the formula, R represents a hydrocarbon group having a carbon number of 1 to 4. m Represents an integer of 1 to 4 and when m is 2 to 4, R's may be the same or different. n Represents a positive number of 1 to 6 on average);
(2) the epoxy resin of (1) having a softening point of 70°C or more;
(3) an epoxy resin composition containing the epoxy resin of (1) or (2) and a curing agent;
(4) the epoxy resin composition of (3) further containing a curing accelerator;
(5) a cured product produced by curing the epoxy resin composition of (3) or (4);
(6) a varnish prepared by dissolving the epoxy resin composition of (3) or (4) in a solvent;
(7) a prepreg comprising a base material impregnated with the epoxy resin composition of (3) or (4);
(8) a laminated plate formed by hot-pressing the prepreg of (7) or a stack of at least two of the prepregs;
(9) a phenol resin expressed by the following formula (2) : 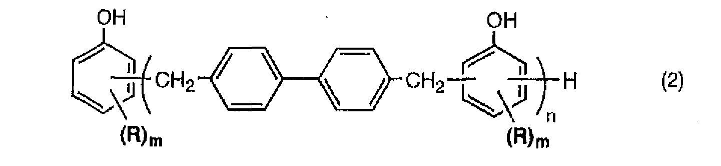 (In the formula, R represents a hydrocarbon group having a carbon number of 1 to 4. m Represents an integer of 1 to 4 and when m is 2 to 4, R's may be the same or different. n Represents a positive number of 1 to 6 on average);
(10) the phenol resin of (9) having a softening point of 80°C or more;
(11) the epoxy resin of (1) in which the R's are each an alkyl group having a carbon number of 1 to 4; and
(12) the epoxy resin of (1) being a mixture of the forms of formula (1) whose methylene groups bind to the o-position and the p-position of the oxyglycidyl groups.

### Advantages

The epoxy resin composition containing an epoxy resin of the present invention has superior heat resistance, dielectric properties, water resistance, and workability, and accordingly, the composition can be advantageously used for various composites, such as prepregs and laminated plates, adhesives, paints, and so forth.

### Best Mode for Carrying Out the Invention

An epoxy resin of the present invention is produced by glycidylation of a phenol aralkyl resin with an epihalohydrin. The phenol aralkyl resin is expressed by the following formula (2): 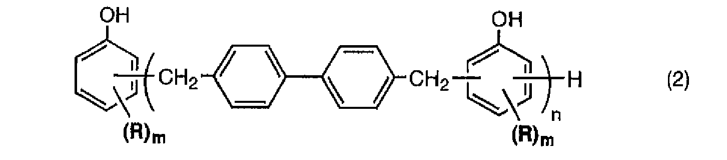 (In the formula, R represents a hydrocarbon groups having a carbon number of 1 to 4, m represents an integer of 1 to 4, and n is a positive number of 1 to 6 on average, wherein when m is 2 to 4, the R's may be the same or different.)

The phenol aralkyl resin expressed by formula (2) is produced by a reaction of a biphenyl derivative with a hydrocarbon-substituted phenol. As disclosed in Patent Documents 2 to 4, the biphenyl derivative is expressed by the following formula (3): 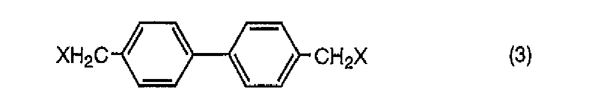 (X represents a halogen atom, an alkoxy group, or a hydroxy group.)

Biphenyl derivatives expressed by formula (3) include bis(chloromethyl)biphenyl, bis(methoxymethyl)biphenyl, and bis(hydroxymethyl)biphenyl.

Hydrocarbon-substituted phenols include phenols having a hydrocarbon group having a carbon number of 1 to 4, such as o-cresol, m-cresol, p-cresol, 2,5-di-tert-butylphenol, 2,6-dimethyl phenol, 2,4-dimethylphenol, 2-tertbutylphenol, 2-tert-butyl-5-methylphenol, 2-tert-butyl-4-methylphenol, 2,3,6-trimethylphenol, and 2-allylphenol. Preferably, the hydrocarbon-substituted phenol has an alkyl group having a carbon number of 1 to 4. Among these particularly preferred are o-cresol, m-cresol, and p-cresol. Those phenols are may be used singly or in combination.

The proportion of the biphenyl derivative to the hydrocarbon-substituted phenol for producing the phenol aralkyl resin is generally 1 mole to 1.1 to 5.0 moles. From the viewpoint of the stability of the resulting epoxy resin dissolved in a solvent and the heat resistance of the cured product, the softening point of the phenol aralkyl resin is preferably 80°C or more. In order to obtain such a favorable phenol aralkyl resin, the proportion of the hydrocarbon-substituted phenol is preferably 1.2 to 2.6 moles relative to 1 mole of biphenyl derivative.

The epoxy resin of the present invention can be produced by a reaction of the phenol aralkyl resin of the present invention with epihalohydrin.

Examples of epihalohydrin used in the glycidylation for producing the epoxy resin of the present invention include epichlorohydrin, epibromhydrin, and epiiodohydrin. Preferably, epichlorohydrin is used because it is industrially easily available and inexpensive. This reaction can be performed according to a known method.

For example, the reaction is performed at a temperature of 20 to 120°C for 0.5 to 10 hours after or while a solid of an alkali metal hydroxide, such as sodium hydroxide or potassium hydroxide, is added to a mixture of the phenol aralkyl resin and epihalohydrin. The alkali metal hydroxide may be in a solution. In this instance, while the alkali metal hydroxide solution is continuously dripped, water and epichlorohydrin may be evaporated from the reaction mixture under reduced or normal pressure. The evaporated water is removed and the evaporated epichlorohydrin is continuously returned to the reaction mixture.

In the above process, epihalohydrin is normally used in a proportion of 0.5 to 20 moles, preferably 0.7 to 10 moles relative to 1 equivalent of the hydroxy group of the phenol aralkyl resin. The alkali metal hydroxide is normally Used in a proportion of 0.5 to 1.5 moles, preferably 0.7 to 1.2 moles, relative to 1 mole of the hydroxy group of the phenol aralkyl resin. In addition, an aprotic solvent, such as dimethyl sulfone, dimethyl sulfoxide, dimethylformamide, or 1,3-dimethyl-2-imidazolidinone, can be added, to produce an epoxy resin containing a small amount of hydrolyzable halogen, which will be defined below. This epoxy resin is particularly suitable as a material for electronic components.

The aprotic polar solvent is used in a proportion of 5% to 200% by weight, preferably 10% to 100% by weight, relative to the weight of epihalohydrin. Addition of an alcohol, such as methanol or ethanol, other than the above-listed solvents, also facilitates the reaction. Other solvents, such as toluene or xylene, may be used. The above-mentioned amount of hydrolyzable halogen can be measured by, for example, titrating the epoxy resin in dioxane with a KOH/ethanol solution while it is refluxed for several tens of minutes.

Alternatively, the epoxy resin of the present invention may be produced by reacting a mixture of a phenol aralkyl resin with an excessive amount of epihalohydrin in the presence of a quaternary ammonium salt, such as tetramethylammonium chloride, tetramethylammonium bromide, or trimethylbenzylammonium chloride, as a catalyst at 50 to 150°C for 1 to 10 hours, and then adding an solid or solution of an alkali metal hydroxide, such as sodium hydroxide or potassium hydroxide, to the resulting phenol aralkyl resin halohydrin ether to allow them to react at 20 to 120°C for 1 to 10 hours to cyclize the halohydrin ether. In this instance, the quaternary ammonium salt is normally used in a proportion of 0.001 to 0.2 mole, preferably 0.05 to 0.1 mole, relative to 1 equivalent of the hydroxy group of the phenol mixture. The alkali metal hydroxide is normally used in a proportion of 0.8 to 1.5 moles, preferably 0.9 to 1.1 moles, relative to 1 equivalent of the hydroxy group of the phenol aralkyl resin.

In general, the product of such a reaction is subjected to removal of excess epihalohydrin and solvent with heating under reduced pressure after or without being washed with water, and is then dissolved again in a solvent, such as toluene or methyl isobutyl ketone. Subsequently, a solution of alkali metal hydroxide, such as sodium hydroxide or potassium hydroxide, is added to the solution of the reaction product to perform a reaction again. Thus, the epoxy resin of the present invention containing a small amount of hydrolyzable halogen can be produced. In this instance, the alkali metal hydroxide is normally used in a proportion of 0.01 to 0.2 mole, preferably 0.05 to 0.1 mole, relative to 1 mole of the hydroxy group of the phenol aralkyl resin. The reaction temperature is normally set at 50 to 120°C and the reaction time is normally set at 0.5 to 2 hours.

After the completion of the reaction, the by-produced salt is removed by filtration or washing with water, and the solvent, such as toluene or methyl isobutyl ketone, is removed by evaporation with heating under reduced pressure. Thus, the epoxy resin of the present invention containing a small amount of hydrolysable halogen can be produced.

Preferably, the epoxy resin of the present invention has a softening point of 70°C or more from the viewpoint of the stability of the epoxy resin after being dissolved in a solvent and the heat resistance of the cured product. Such an epoxy resin can be produced by epoxidizing a phenol aralkyl resin of the present invention having a softening point of 80°C or more.

The epoxy resin composition of the present invention will now be described. The epoxy resin composition of the present invention contains the epoxy resin of the invention and a curing agent. The epoxy resin of the invention can be used singly or in combination with another epoxy resin in the epoxy resin composition. If the epoxy resin is used in combination, the ratio of the epoxy resin of the present invention to the total epoxy resin is preferably 30% by weight or more, and particularly 40% by weight or more.

Epoxy resins that can be used in combination with the epoxy resin of the present invention include, but not limited to, polycondensates and their modifications of bisphenol A, bisphenol F, bisphenol S, fluorene bisphenol, terpene diphenol, 4,4'-biphenol, 2,2'-biphenol, 3,3',5,5'-tetramethyl-[1,1'-biphenyl]-4,4'-diol, hydroquinone, resorcin, naphthalenediol, tris(4-hydroxyphenyl)methane, 1,1,2,2-tetrakis(4-hydroxyphenyl)ethane, or a phenol compound (phenol, alkyl-substituted phenol, naphthol, alkyl-substituted naphthol, dihydroxybenzene, dihydroxynaphthalene, etc.) and formaldehyde, acetaldehyde, benzaldehyde, p-hydroxybenzaldehyde, o-hydroxybenzaldehyde, p-hydroxyacetophenone, o-hydroxyacetophenone, dicyclopentadiene, furfural, 4,4'-bis(chloromethyl)-1,1'-biphenyl, 4,4'-bis(methoxymethyl)-1,1'-biphenyl, 1,4'-bis(chloromethyl)benzene, 1,4'-bis(methoxymethyl)benzene, or the like; halogenated bisphenols, such as tetrabromobisphenol A; glycidyl ether compounds derived from alcohols; alicyclic epoxy resins; glycidyl amine epoxy resins; glycidyl ester epoxy resins; and other solid or liquid epoxy resins. These epoxy resins may be used singly or in combination.

The curing agent contained in the epoxy resin composition of the present invention may be, for example, an amine-based compound, an acid anhydride-based compound, an amide-based compound, or a phenol-based compound. Examples of such a curing agent include, but not limited to, diaminodiphenylmethane, diethylenetriamine, triethylenetetramine, diaminodiphenylsulfone, isophoronediamine, dicyanodiamide, polyamide resin synthesized from linolenic acid dimer and ethylenediamine, phthalic anhydride, trimellitic anhydride, pyromellitic dianhydride, maleic anhydride, tetrahydrophthalic anhydride, methyltetrahydrophthalic anhydride, methylnadic anhydride, hexahydrophthalic anhydride, methylhexahydrophthalic anhydride, polycondensates and their modifications of bisphenol A, bisphenol F, bisphenol S, fluorene bisphenol, terpene diphenol, 4,4'-biphenol, 2,2'-biphenol, 3,3',5,5'-tetramethyl-[1,1'-biphenyl]-4,4'-diol, hydroquinone, resorcin, naphthalene diol, tris(4-hydroxyphenyl)methane, 1,1,2,2-tetrakis(4-hydroxyphenyl)ethane or a phenol compound (phenol, alkyl-substituted phenol, naphthol, alkyl-substituted naphthol, dihydroxybenzene, dihydroxynaphthalene, etc.) and formaldehyde, acetaldehyde, benzaldehyde, p-hydroxybenzaldehyde, o-hydroxybenzaldehyde, p-hydroxyacetophenone, o-hydroxyacetophenone, dicyclopentadiene, furfural, 4,4'-bis(chloromethyl)-1,1'-biphenyl, 4,4'-bis(methoxymethyl)-1,1'-biphenyl, 1,4'-bis(chloromethyl)benzene, 1,4'-bis(methoxymethyl)benzene or the like, halogenated bisphenols such as tetrabromobisphenol. A, imidazole, BF₃-amine complexes, and guanidine derivatives. These curing resins may be used singly or in combination.

In the epoxy resin composition of the present invention, the curing agent is preferably used in a proportion of 0.5 to 1.5 equivalents, particularly 0.6 to 1.2 equivalents relative to 1 equivalent of the epoxy group of the epoxy resin. If the curing agent content is less than 0.5 equivalent or more than 1.5 equivalents relative to 1 equivalent of the epoxy group, the resulting cured product may not be sufficiently cured; hence, a satisfying cured product cannot be obtained.

When the curing agent is used, a curing accelerator may be used together. Curing accelerators that can be used in combination include, for example, imidazoles, such as 2-methylimidazole, 2-ethylimidazole, 2-phenylimidazole, and 2-ethyl-4-methylimidazole; tertiary amines, such as 2-(dimethylaminomethyl)phenol, triethylenediamine, triethanolamine, and 1,8-diazabicyclo(5,4,0)undecene-7; organic phosphines, such as triphenylphosphine, diphenylphosphine, and tributylphosphine; metal compounds, such as tin octoate; tetra-substituted phosphonium tetra-substituted borate, such as tetraphenylphosphonium tetraphenylborate, tetraphenylphosphonium ethyltriphenylborate; tetraphenylboronates, such as 2-ethyl-4-methylimidazole tetraphenylborate, and N-methylmorpholine tetraphenylborate. If the curing accelerator is used, 0.01 to 15 parts by weight of curing accelerator is used relative to 100 parts by weight of the epoxy resin.

In addition, the epoxy resin composition of the present invention may contain a thermosetting resin, such as cyanate resin and/or a prepolymer using a cyanate resin as a raw material, bismaleimide-triazine resin, melamine resin or thermosetting polyimide, or a thermoplastic resin, such as phenoxy resin, polyamide imide resin, polyphenylene oxide resin or polyethersulfone resin, in combination.

Furthermore, various compounding ingredients may be added if necessary, such as an inorganic filler, a silane coupling agent, a coloring agent, a binder resin, a levelling agent, ion scavenger, and release agent.

Examples of the inorganic filler include fused silica, crystalline silica, silicon carbide, silicon nitride, boron nitride, calcium carbonate, barium sulfate, calcium sulfate, mica, talc, clay, alumina, magnesium oxide, zirconium oxide, aluminium hydroxide, magnesium hydroxide, calcium silicate, aluminum silicate, lithium aluminum silicate, zirconium silicate, barium titanate, glass fiber, carbon fiber, molybdenum disulfide, and asbestos. Among these preferred are fused silica, crystalline silica, silicon nitride, boron nitride, calcium carbonate, barium sulfate, calcium sulfate, mica, talc, clay, alumina, and aluminium hydroxide. These inorganic fillers may be used singly or in combination.

Examples of the silane coupling agent include silane coupling agents, such as 3-glycidokilpropyltrimethoxysilane, 3-glycidoxypropyltrimethoxysilane, 3-glycidoxypropylmethyldimethoxysilane, 3-glycidoxypropylmethyldimethoxysilane, 2-(3,4-epoxycyclohexyl)ethyltrimethoxysilane, N-(2-aminoethyl)3-aminopropylmethyldimethoxysilane, N-(2-aminoethyl)3-aminopropylmethyltrimethoxysilane, 3-aminopropyltriethoxysilane, 3-mercaptopropyltrimethoxysilane, vinyltrimethoxysilane, N-(2-(vinylbenzylamino)ethyl)3-aminopropyltrimethoxysilane hydrochloride, 3-methacryloxypropyltrimethoxysilane, 3-chloropropylmethyldimethoxysilane, and 3-chloropropyltrimethoxysilane; titanium coupling agents, such as isopropyl(N-ethylaminoethylethylamino)titanate, titanium di(dioctylpyrophosphate)oxyacetate, tetraisopropyl di(dioctylphosphite)titanate, and neoalkoxytri(p-N-(β-aminoethyl)aminophenyl)titanate; zirconium or aluminum coupling agents, such as Zr-acetylacetonate, Zr-methacrylate, Zr-propionate, neoalkoxytris(dodecanoyl)benzenesulfonyl zirconate, neoalkoxytris(ethylenediaminoethyl)zirconate, neoalkoxytris(m-aminophenyl)zirconate, ammonium zirconium carbonate, Al- acetylacetonate, N-methacrylate, and N-propionate. Among these preferred are silicon coupling agents. The use of coupling agent can lead to a highly moisture-resistant cured product whose adhesive strength is not degraded even after moisture absorption.

Examples of the coloring agent include, but not particularly limited to, a variety of organic dyes, such as phthalocyanine, azo, disazo, quinacridone, anthraquinone, flavanthrone, perinone, perylene, dioxazine, condensed azo, and azomethine; and inorganic pigments, such as titanium oxide, lead sulfate, chromium yellow, zinc yellow, chrome vermilion, iron red, cobalt purple, navy blue, blue, ultramarine blue, carbon black, chromium green, chromium oxide, and cobalt green.

The epoxy resin composition of the present invention can be prepared by mixing the above-described constituents with a Henschel mixer, a planetary mixer, or the like, and then uniformly dispersing the mixture with a two-roll, a kneader, an extruder, a sand grinder, or the like. The composition may also be uniformly mixed with a solvent and is used as a varnish. The resulting epoxy resin composition can easily be cured by a known method.

For example, the resulting epoxy resin composition of the present invention formed into a cured product of the present invention by, for example, melt casting, transfer molding, injection molding, or compression molding, followed by heating at 80 to 200°C for 2 to 10 hours.

The epoxy resin of the present invention has a high solubility in solvents and is hence difficult to precipitate. Accordingly, a varnish prepared by dissolving the epoxy resin composition of the present invention can be suitably used as an adhesive for laminated plates or the like. In this instance, the epoxy resin composition of the present invention may be dissolved in a solvent, for example, an amide solvent, such as γ-butyrolactone, N-methylpyrrolidone (NMP), N,N-dimethylformamide (DMF), N,N-dimethylacetamide, or N,N-dimethylimidazolidinone; a sulfone, such as tetramethylene sulfone; an ether solvent, such as diethylene glycol dimethyl ether, diethylene glycol diethyl ether, propylene glycol, propylene glycol monomethyl ether, propylene glycol monomethyl ether monoacetate, or propylene glycol monobutyl ether; a ketone solvent, such as methyl ethyl ketone or methyl isobutyl ketone; or an aromatic solvent, such as toluene or xylene. Then, a base, such as glass fiber, carbon fiber, polyester fiber, polyamide fibber, alumina fiber, or paper, is impregnated with the vanish and the resulting prepreg is hot-pressed into a cured product. Alternatively, the epoxy resin composition may be dissolved in a solvent above and the varnish is formed to a sheet. For the prepreg, the proportion of the solvent in the mixture of the epoxy resin composition of the invention and the solvent is normally 10% to 70% by weight, preferably 15% to 70% by weight. For the sheet, the solvent is used in such a proportion as the solid content (content of constituents other than the solvent) in the resulting varnish is normally 10% to 80% by weight, preferably 20% to 70% by weight.

When the varnish is formed into a sheet, the varnish itself is applied onto a base by gravure coating, screen printing, metal masking, or spin coating so that the thickness will be a predetermined value, for example, 5 to 100 µm. Which method is applied is appropriately selected according to the material, shape, and size of the base and the thickness of the sheet. The base may be a metal foil, such as copper foil or a film made of a polymer, such as polyamide, polyamide imide, polyacrylate, polyethylene terephthalate, polybutylene terephthalate, polyether ether ketone, polyether imide, polyether ketone, polyketone, polyethylene or polypropylene, or their copolymer. Particularly preferably, a polyimide film or a copper foil is used. If a release film is use, the sheet is used as a bonding sheet. The bonding sheet refers to a laminate of the release film and another release material bonded together with an adhesive layer (varnish) applied on one surface of the release film. The bonding sheet is used as an adhesive material for, for example, bonding flexible printed circuit boards together. The resulting sheet is heated, thereby producing a sheet of cured product.

### Examples

The present invention will be further described with reference to Examples. In the following description, the word part(s) refers to part(s) by weight unless otherwise specified.

Epoxy equivalent, softening point, and melt viscosity are measured under the following conditions:
· Epoxy equivalent
   Measured by a method in accordance with JIS K-7236, the unit being expressed by g/eq.
· Softening point
   Measured by a method in accordance with JIS K-7234.
Melt viscosity
   Melt viscosity by a cone plate method at 150°C
   Measuring apparatus: Cone/plate (ICI) high-temperature viscometer
(manufactured by RESEACH EQUIPMENT (LONDON) LTD.)
Cone No. 3 (measurement range: 0 to 2.00 Pa·s)
Sample quantity: 0.15 ± 0.01 g

### Example 1

A four-neck flask equipped with a stirrer, a thermometer, and a condenser was charged with 95 parts of o-cresol and 1 part of p-toluenesulfonic acid. Then, 151 parts of 4,4'-bis(chloromethyl)-1,1'-biphenyl was added over a period of 2 hours with stirring to perform a reaction at 120°C for 2 hours. After the reaction, 400 parts of MIBK was added and the product was repeatedly washed with water. Subsequently, unreacted cresol and methyl isobutyl ketone (MIBK) were evaporated from the oil phase with heating under reduced pressure to yield 180 parts of phenol aralkyl resin (P1) of the present invention. The resulting phenol aralkyl resin (P1) had a softening point of 104°C and a melt viscosity of 2.0 Pa·s or more, and the hydroxy group equivalent of the resin was 242 g/eq.

### Example 2

A phenol aralkyl resin (P2) of the present invention was obtained in an amount of 196 parts in the same manner as in Example 1 except that 95 parts of o-cresol was replaced with 130 parts of m-cresol. The resulting phenol aralkyl resin (P2) had a softening point of 109°C and a melt viscosity of 2.00 Pa·S or more, and the hydroxy group equivalent of the resin was 235 g/eq.

### Example 3

To 120 parts of the phenol aralkyl resin (P1) prepared in Example 1 were added 275 parts of epichlorohydrin and 64 parts of dimethyl sulfoxide. After dissolving, the solution was heated to 55°C, and 20 parts of sodium hydroxide (purity: 99%) flakes were added to the reaction mixture over a period of 90 minutes. Then the mixture was further subjected to a reaction at 45°C for 2 hours and at 70°C for 1 hour. Subsequently, the reaction mixture was repeatedly washed with water to neutralize, and an excess epichlorohydrin was evaporated. Then, 296 parts of MIBK was added to and dissolved in the residue. The resulting MIBK solution was heated to 75°C and 5 parts of 30% by weight sodium hydroxide solution was added. After a reaction for 1 hour, the reaction product was repeatedly washed with water to neutralize. Subsequently, the MIBK was evaporated from the oil phase with heating at reduced pressure to yield 88 parts of epoxy resin (E1). The epoxy equivalent of the resulting epoxy resin (E1) was 323 g/eq, and the resin had a softening point of 85°C and a melt viscosity of 1.76 Pa·s.

### Example 4

An epoxy resin (E2) of the present invention was obtained in an amount of 133 parts in the same manner as in Example 1 except that in Example 3, 120 parts of phenol aralkyl resin (P1) prepared in Example 1 was replaced with 117 parts of phenol aralkyl resin (P2) prepared in Example 2. The epoxy equivalent of the resulting epoxy resin (E2) was 308 g/eq, and the resin had a softening point of 93°C and a melt viscosity of 2.00 Pa·s or more.

### Test Examples 1 to 3

Epoxy resins (E1) and (E2) prepared in Examples 3 and 4 and an epoxy resin (NC-3000, produced by Nippon Kayaku, softening point: 57°C) for comparison whose R of formula (1) is a hydrogen atom were dissolved in a solvent methyl ethyl ketone so that the resin concentration would be 70% by weight. The resin solutions were stored at 5°C. The test results are shown in Table 1. The evaluation criteria were as follows:
Good: The resin was not precipitated even after two weeks elapsed after being dissolved.
Bad: The resin was precipitated within two weeks after being dissolved.

**Table 1**

| | Test Example 1 | Test Example 2 | Test Example 3 |
|---|---|---|---|
| Epoxy resin | E1 | E2 | NC-3000 |
| Test result | Good | Good | Bad |

### Examples 5 to 7, Comparative Example 1

Compositions of epoxy resin varnishes shown in Table 2 were prepared. Each of the resulting varnishes was impregnated into glass cloths (WEA18W105F115N, manufactured by Nitto Boseki) and the glass cloths were dried with warm air dryer at 120°C for 7 minutes to yield semi-cured prepregs. Eight prepregs and a copper foil (JTC foil, 35 µm, manufactured by Nikko Gould) were stacked and pressed at 40 kgf/cm² with heating at 170°C for 60 minutes to yield a glass cloth laminated plate. The resulting laminated plate was measured for the following properties by the following methods. The results are shown in Table 2.
· Glass transition temperature
   Thermo-mechanical analyzer (TMA): ULVAC-RIKO TM-7000 Heating rate: 2°C/minute
· Copper foil peel strength
   Tensile tester: Toyo Baldwin, Tensilon RTM-500
   Tension mode: 180° peel
   Cloth head speed: 200 mm/min.
   Measuring temperature: 30°C
· Water absorption rate
   Test piece: 5 cm × 5 cm
   Weight increase (percent by weight) after boiling for 24 hours in hot water of 100°C
· Dielectric constant
   Measured in accordance with JIS 6481

**Table 2**

| Composition | Example 5 | Example 6 | Example 7 | Comparative Example 1 |
|---|---|---|---|---|
| E1 | 100 | | 100 | |
| E2 | | 100 | | |
| R-232 | | | | 100 |
| PN-80 | 33 | 34 | 28 | 22 |
| 2E4MZ | 0.3 | 0.3 | | 0.3 |
| Cyanate resin | | | 36 | |
| MEK | 89 | 89 | 103 | 81 |
| Cured product properties | | | | |
| Glass transition temperature (°C) | 150 | 145 | 170 | 125 |
| Copper foil peel strength (kN/m) | 2.7 | 2.8 | 2.6 | 1.9 |
| Water absorption rate (%) | 0.5 | 0.5 | 0.4 | 0.5 |
| Dielectric constant | 4.5 | 4.5 | 4.3 | 4.8 |

In the Table,
R-232: Brominated bisphenol A epoxy resin (Epomick R-232 produced by Mitsui Chemical, epoxy equivalent: 483 g/eq)
PN-80: phenol novolak resin (PN-80 produced by Nippon Kayaku, hydroxy group equivalent: 105 g/eq, softening point: 86°C)
2E-4MZ: 2-ethyl-4-methylimidazole cyanate resin: cyanate resin prepolymer (B-40S: produced by Asahi-ciba, bisphenol A dicyanate resin, trimerization
ratio: 40%, solid content: 75% MEK solution)
MEK: methyl ethyl ketone

Table 1 shows that the epoxy resins of the present invention exhibit superior stability after being dissolved in a solvent, and Table 2 shows that the cured products of the present invention exhibit superior heat resistance, adhesion, water resistance to the conventional bisphenol A epoxy resin, and have lower dielectric properties.

## Claims

1. An epoxy resin expressed by formula (1); 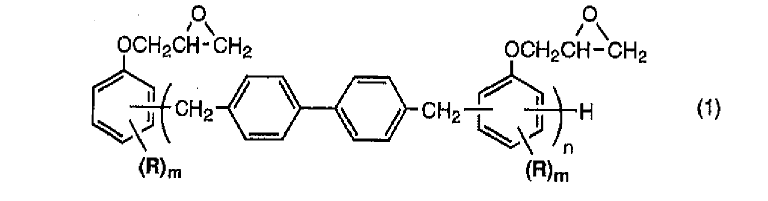 (wherein, R represents a hydrocarbon group having a carbon number of 1 to 4, m represents an integer of 1 to 4, and n represents a positive number of 1 to 6 on average, and wherein when m is 2 to 4, R's may be the same or different.)

2. The epoxy resin according to Claim 1, wherein the epoxy resin has a softening point of 70°C or more.

3. An epoxy resin composition containing the epoxy resin as set forth in Claim 1 or 2 and a curing agent.

4. The epoxy resin composition according to Claim 3, further containing a curing accelerator.

5. A cured product produced by curing the epoxy resin composition as set forth in Claim 3 or 4.

6. A varnish prepared by dissolving the epoxy resin composition as set forth in Claim 3 or 4 in a solvent.

7. A prepreg comprising a base material impregnated with the epoxy resin composition as set forth in Claim 3 or 4.

8. A laminated plate formed by hot-pressing the prepreg as set forth in Claim 7 or a stack of at least two of the prepregs.

9. A phenol resin expressed by formula (2): 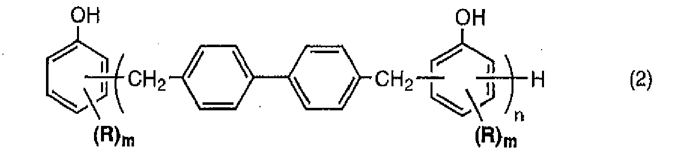 (wherein R represent a hydrocarbon group having a carbon number of 1 to 4, m represents an integer of 1 to 4, n represents a positive number of 1 to 6 on average, and wherein when m is any one of 2 to 4, R's may be the same or different)

10. The phenol resin according to Claim 9, wherein the phenol resin has a softening point of 80°C or more.

11. The epoxy resin according to Claim 1, wherein R's are each an alkyl group having a carbon number of 1 to 4.

12. The epoxy resin according to Claim 1, wherein the epoxy resin is a mixture of the forms of formula (1) whose methylene groups bind to the o-position and the p-position of the oxyglycidyl groups.
